# FASCICULE DE BREVET EUROPEEN

(11) **EP 2 926 404 B1**
(45) Date de publication et mention de la délivrance du brevet: **17.10.2018**
(21) Numéro de dépôt: 13808110.4
(22) Date de dépôt: 25.11.2013
(51) Int. Cl.: H01M 12/08, H01M 10/44

(54) **PROCÉDÉ DE CHARGE D'UNE BATTERIE ZINC-AIR À POTENTIEL LIMITÉ**
VERFAHREN ZUM LADEN EINER ZINK-LUFT-BATTERIE MIT BEGRENZTEM POTENTIAL
METHOD FOR CHARGING A ZINC-AIR BATTERY WITH LIMITED POTENTIAL

(30) Priorité: 29.11.2012 FR 1261398
(43) Date de publication de la demande: 07.10.2015
(73) Titulaire: Electricité de France, 75008 Paris (FR)
(72) Inventeur: TOUSSAINT, Gwenaëlle, F-77140 Nemours (FR); STEVENS, Philippe, F-77940 Noisy Rudignon (FR)
(74) Mandataire: Cabinet Plasseraud
(86) Numéro de dépôt international: PCT/FR2013/052846
(87) Numéro de publication internationale: WO 2014/083268

(56) Documents cités:
- WO-A1-2012/156639
- WO-A2-2011/098916
- US-A- 5 250 370
- US-A1- 2012 249 080

## Description

La présente invention concerne un procédé électrochimique de charge d'une batterie de type zinc-air à électrolyte aqueux, ainsi qu'un procédé de stockage et de restitution d'énergie électrique comprenant l'étape de charge selon l'invention.

Les batteries métal-air utilisent une électrode négative à base d'un métal tel que le zinc, le fer ou le lithium, couplée à une électrode à air. L'électrolyte le plus souvent utilisé est un électrolyte aqueux alcalin.

Lors de la décharge d'une telle batterie, de l'oxygène est réduit à l'électrode positive et le métal est oxydé à l'électrode négative :

Décharge à l'électrode négative : M → Mⁿ⁺ + n e⁻

Décharge à l'électrode positive : O₂ + 2 H₂O + 4 e⁻ → 4 OH⁻

Lorsqu'une batterie métal-air doit être rechargée électriquement, le sens du courant est inversé. De l'oxygène est produit à l'électrode positive et le métal est redéposé par réduction à l'électrode négative :

Recharge à l'électrode négative : Mⁿ⁺ + n e⁻ → M

Recharge à l'électrode positive : 4 OH⁻ → O₂ + 2 H₂O + 4 e⁻

L'avantage des systèmes métal-air réside dans l'utilisation d'une électrode positive de capacité infinie. Les générateurs électrochimiques de type métal-air sont donc connus pour leurs énergies massiques élevées, pouvant atteindre plusieurs centaines de Wh/kg. L'oxygène consommé à l'électrode positive n'a pas besoin d'être stocké dans l'électrode mais peut être prélevé dans l'air ambiant. Les électrodes à air sont également utilisées dans des piles à combustible alcalines qui sont particulièrement avantageuses par rapport à d'autres systèmes en raison des cinétiques réactionnelles élevées au niveau des électrodes et en raison de l'absence de métaux nobles tels que le platine.

De nombreux travaux ont été effectués depuis plusieurs décennies pour la mise au point et l'optimisation d'électrodes à air.

Une électrode à air est une structure solide poreuse en contact avec l'électrolyte liquide. L'interface entre l'électrode à air et l'électrolyte liquide est une interface dite « à triple contact» où sont présents simultanément la matière solide active de l'électrode, l'oxydant gazeux, c'est-à-dire l'air, et l'électrolyte liquide. Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291.

Les batteries de type métal-air fonctionnent très bien en décharge, mais plusieurs problèmes lors de la recharge restent encore à résoudre.

D'une part, l'électrode à air n'est pas conçue pour être utilisée en sens de recharge. L'électrode à air a une structure poreuse et fonctionne sous forme d'électrode volumique dans laquelle la réaction électrochimique a lieu dans le volume de l'électrode, à l'interface entre un gaz (l'oxygène de l'air), un liquide (l'électrolyte) et un solide (l'électrode et le catalyseur). Ainsi l'interface entre l'électrode à air et l'électrolyte liquide est une interface dite « à triple contact » où sont présents simultanément la matière solide active de l'électrode, l'oxydant gazeux, c'est-à-dire l'air, et l'électrolyte liquide. L'électrode à air est habituellement composée de grains de carbone à haute surface tel que le Vulcan® XC72 commercialisé par Cabot. La surface du carbone peut être augmentée par réaction avec un gaz, tel que le CO, préalablement à son intégration dans l'électrode à air. Une électrode poreuse est ensuite fabriquée par agglomération des grains de carbone à l'aide d'un polymère hydrophobe fluoré tel que FEP (fluorinated ethylene propylene) commercialisé par la société Dupont. Le brevet WO 2000/036677 décrit une telle électrode pour batterie métal-air.

Il est préférable d'avoir une surface de réaction sur l'électrode à air la plus élevée possible pour avoir une densité de courant par rapport à la surface géométrique de l'électrode la plus haute possible. Une grande surface de réaction est également utile parce que la densité de l'oxygène gazeux est faible par rapport à un liquide. La grande surface de l'électrode permet de multiplier les sites de réaction. Par contre, cette grande surface de réaction n'est plus nécessaire pour la réaction inverse d'oxydation lors de la recharge puisque la concentration en matière active est beaucoup plus élevée.

L'utilisation d'une électrode à air en sens de recharge pour effectuer une réaction d'oxydation et dégagement d'oxygène présente de nombreux inconvénients. La structure poreuse de l'électrode à air est fragile. Il a été observé par les inventeurs que cette structure était détruite mécaniquement par le dégagement de gaz quand elle était utilisée pour produire de l'oxygène par oxydation d'un électrolyte liquide. La pression hydraulique générée au sein de l'électrode par la production de gaz est suffisante pour provoquer une rupture des liaisons entre les grains de carbone constituant l'électrode à air.

Il a également été observé par les inventeurs que le catalyseur ajouté à l'électrode à air pour améliorer le rendement énergétique de la réaction de réduction de l'oxygène tel que l'oxyde de manganèse ou l'oxyde de cobalt n'est pas stable au potentiel nécessaire à la réaction d'oxydation inverse. La corrosion du carbone en présence d'oxygène par oxydation du carbone est également accélérée à des potentiels plus élevés

Certains inventeurs proposent d'utiliser un catalyseur de réduction d'oxygène plus résistant couplé à un catalyseur de dégagement d'oxygène dans une électrode bifonctionnelle composée de deux couches couplées électriquement, comme décrit dans le brevet US 5 306 579. Mais cette configuration produit des électrodes ayant néanmoins une durée de vie faible et un nombre de cycles limité.

La dégradation de l'électrode à air, quand elle est utilisée pour recharger la batterie métal-air, réduit fortement la durée de vie de la batterie. Il s'agit d'une des principales causes du faible développement commercial les accumulateurs métal-air rechargeables électriquement.

Un moyen de protéger l'électrode à air contre une dégradation consiste à utiliser une deuxième électrode positive qui est utilisée pour la réaction de dégagement d'oxygène. L'électrode à air est alors découplée de l'électrode de dégagement d'oxygène et seule cette dernière est utilisée pendant la phase de charge. Le brevet US 3 532 548 de Z. Starchurski décrit par exemple une batterie zinc-air avec une deuxième électrode auxiliaire utilisée pour la phase de charge.

D'autre part, certains problèmes peuvent également intervenir du côté de l'électrode négative lors de la recharge électrique d'une batterie métal-air, et tout particulièrement une batterie zinc-air.

Lors de la recharge, les ions métalliques Zn²⁺ sont réduits à l'électrode négative et se déposent sous leur forme métallique Zn dès que le potentiel au niveau de cette électrode est suffisamment négatif. Un dépôt uniforme et homogène du métal sur l'électrode est souhaité pour assurer une bonne tenue durant les cycles de charges et de décharges de cette électrode.

Or, il a été constaté que, dans certaines conditions, le métal se déposait sous forme de mousse peu adhérente à la surface de l'électrode, mousse qui pouvait ensuite se détacher de l'électrode provoquant une perte de matière active et par conséquent une perte de capacité massique de la batterie. Dans d'autres cas, il a été constaté que le métal pouvait également se déposer sous forme dendritique. Ces dendrites peuvent croître jusqu'à atteindre l'électrode positive pendant la charge, provoquant un court-circuit interne empêchant la recharge.

Pour tenter de résoudre ces problèmes, et produire un dépôt de zinc homogène lors de la recharge, certaines solutions ont déjà été proposées :
- l'ajout d'additifs dans l'électrolyte (voir par exemple C.W. Lee et al., « Effect of additives on the electrochemical behaviour of zinc anodes for zinc/air fuel cells », Journal of Power Sources 160 (2006) 161-164, et C.W. Lee et al., « Novel electrochemical behavior of zinc anodes in zinc/air batteries in the presence of additives », Journal of Power Sources 159 (2006) 1474-1477),
- la mise en place d'un séparateur sur l'électrode (voir par exemple H.L. Lewis et al., « Alternative separation evaluations in model rechargeable silver-zinc cells », Journal of Power Sources 80 (1999) 61-65, et E.L. Dewi et al., « Cationic polysulfoninun membrane as separator in zinc-air cell », Journal of Power Sources 115 (2003) 149-152),
- l'utilisation d'un hydrogel polyélectrolyte comme électrolyte solide (voir par exemple C. Iwakura et al., « Charge-discharge characteristics of nickel/zinc battery with polymer hydrogel electrolyte » Journal of Power Sources 152 (2005) 291-294, G.M. Wua et al., « Study of high-anionic conducting sulfonated microporous membranes for zinc-air electrochemical cells », Materials Chemistry and Physics 112 (2008) 798-804, et H. Ye et al., «Zinc ion conducting polymer electrolytes based on oligomeric polyether/PVDF-HFP blends » Journal of Power Sources 165 (2007) 500-508.).

Par ailleurs, le Lawrence Berkeley Laboratory (LBL) et MATSI Inc. ont cherché à augmenter la porosité dans l'électrode pour diminuer les densités de courant surfaciques responsables de la formation des dendrites, lorsqu'elles sont élevées.

Malgré ces différentes propositions, les problèmes rencontrés lors de la recharge d'une batterie zinc-air ne sont pas résolus. Un des objectifs de la présente invention est de proposer un procédé de charge d'une batterie zinc-air ne provocant pas la formation d'un dépôt de zinc néfaste au bon fonctionnement de la batterie, en particulier les dépôts sous forme de mousse ou sous forme de dendrites, sur l'électrode négative.

Un tel procédé de charge amélioré doit permettre d'augmenter le nombre de cycles de charges et décharges électriques de la batterie zinc-air, et ainsi de conférer avantageusement à la batterie une plus grande durée de vie.

Il a été observé par les inventeurs qu'un contrôle du potentiel de l'électrode négative pendant la charge pour éviter qu'il ne soit trop élevé permet de limiter la formation de dépôt de zinc sous forme de mousse ou de dendrites.

La présente invention a pour objet un procédé de charge d'une batterie zinc-air comprenant au moins une électrode négative, une première électrode positive à air et une seconde électrode positive de dégagement d'oxygène, caractérisé en ce que le potentiel de l'électrode négative pendant la charge est maintenu à une valeur absolue inférieure ou égale à la valeur d'un potentiel critique de charge, ledit potentiel critique de charge étant compris entre 1,45 V et 1,70 V, et le potentiel de l'électrode négative étant mesuré par rapport à une électrode de référence, ladite électrode de référence étant l'électrode à air de la batterie qui n'est pas utilisée lors de la charge.

En outre, la présente invention a pour objet un procédé de stockage et de restitution d'énergie électrique utilisant une batterie zinc-air comprenant au moins une électrode négative et une électrode positive à air, comprenant les étapes successives suivantes :
(a) une phase de charge, telle que définie précédemment, et
(b) une phase de décharge.

Enfin, une batterie zinc-air comprenant :
- une borne négative,
- une borne positive,
- une électrode négative, connectée à la borne négative,
- une première électrode positive à air,
- une seconde électrode positive à dégagement d'oxygène,
- un moyen de commutation permettant de connecter à la borne positive soit la première électrode positive à air, soit la seconde électrode positive de dégagement d'oxygène,
- un moyen de charge de la batterie, pouvant être connecté à l'électrode négative et à la seconde électrode positive à dégagement d'oxygène, et
- un moyen de contrôle de la charge de la batterie adapté pour mesurer la tension entre l'électrode négative et la première électrode positive à air, et pour agir sur le moyen de charge de façon à ce que la valeur absolue de cette tension soit inférieure ou égale à une valeur de potentiel critique,
est également un objet de la présente invention.
La **Figure 1** annexée à la présente demande est une représentation schématique d'un mode de réalisation d'une batterie objet de la présente invention, dans une configuration de recharge.
La **Figure 2** représente un exemple de tension entre l'électrode négative et l'électrode à air et de courant de charge, en fonction du temps, d'une batterie zinc-air pendant une phase de charge.

Dans la présente demande, les termes « charge » et « recharge » sont employés comme synonymes, et sont interchangeables.

Le procédé de charge selon la présente invention est mis en oeuvre sur une batterie de type zinc-air. Cette batterie zinc-air comprend, de façon classique, au moins une électrode négative, une première électrode positive à air et une seconde électrode positive de dégagement d'oxygène. L'électrode négative est une électrode de zinc (Zn/Zn²⁺).

La première électrode positive de la batterie selon l'invention est une électrode à air. Ce type d'électrode a été décrit de manière générale ci-avant. N'importe quel type d'électrode à air peut être utilisé dans la batterie selon la présente invention. En particulier, la première électrode positive à air de la batterie peut être une électrode obtenue par agglomération d'une poudre de carbone constituée de grains de carbone à haute surface spécifique, telle que décrite dans la demande de brevet WO 2000/036677. L'électrode à air, à base de particules de carbone, peut contenir en outre au moins un catalyseur de réduction d'oxygène. Ce catalyseur de réduction d'oxygène est de préférence choisi dans le groupe constitué par l'oxyde de manganèse et l'oxyde de cobalt.

La seconde électrode positive de la batterie selon l'invention est une électrode de dégagement d'oxygène. N'importe quel type d'électrode remplissant cette fonction connue par l'homme du métier peut être utilisé dans la batterie selon la présente invention. La seconde électrode positive de dégagement d'oxygène peut par exemple être une électrode métallique stable dans l'électrolyte de la batterie, tel qu'une électrode en argent, en nickel ou en acier inoxydable.

Cette batterie peut être soumise à une ou plusieurs phases de charge et une ou plusieurs phases de décharges.

Le procédé selon l'invention porte notamment sur la phase de charge. Les inventeurs ont découvert que pour résoudre les problèmes liés à la formation d'un dépôt de zinc néfaste au bon fonctionnement de la batterie, en particulier les dépôts sous forme de mousse ou sous forme de dendrites, sur l'électrode négative, le potentiel de l'électrode négative pendant la charge devait être maintenu à une valeur absolue inférieure ou égale à la valeur d'un potentiel critique de charge, ledit potentiel critique de charge étant compris entre 1,45 V et 1,70 V, et le potentiel de l'électrode négative étant mesuré par rapport à une électrode de référence, ladite électrode de référence étant l'électrode à air de la batterie qui n'est pas utilisée lors de la charge.

La valeur du potentiel critique de charge de la batterie peut varier en fonction de la nature de la batterie considérée, par exemple en fonction de la nature des électrodes. Le potentiel critique de charge peut avoir été préalablement établi pour une batterie donnée, et il peut donc s'agir d'une donnée fournie avec la batterie, par exemple par un constructeur. Ce potentiel peut également être déterminé expérimentalement préalablement à la recharge de celle-ci.

En particulier, le potentiel critique de charge d'une batterie zinc-air selon l'invention peut être déterminé selon la méthode suivante :
- débuter la charge de ladite batterie zinc-air, en passant un courant constant entre l'électrode de zinc et la seconde électrode positive de dégagement d'oxygène,
- mesurer le potentiel de l'électrode de zinc par rapport à la première électrode à air après une minute de charge, et
- déterminer le potentiel critique de charge en ajoutant 20 mV à la valeur absolue dudit potentiel mesuré.

Le potentiel critique de charge est compris entre 1,45 V et 1,70 V, préférentiellement entre 1,47 V et 1,58 V.

Le contrôle du potentiel de l'électrode négative peut comprendre la mesure de ce potentiel, sa comparaison avec la valeur du potentiel critique de charge, et une rétroaction sur le procédé de charge pour maintenir la valeur absolue du potentiel à la valeur désirée.

Le potentiel de l'électrode négative de la batterie zinc-air peut être mesuré selon les méthodes connues de l'homme du métier. Toutefois, dans le cas des batteries métal-air, il est connu que, pendant la charge, le potentiel de l'électrode positive augmente beaucoup plus rapidement que le potentiel de l'électrode négative. De ce fait, il est possible que la différence de potentiel mesurée entre la borne positive et la borne négative de la batterie ne reflète pas instantanément précisément le potentiel de la borne négative, et que le contrôle sur la tension aux bornes de la batterie ne soit pas assez précis pour assurer le contrôle du potentiel de l'électrode négative.

C'est pourquoi le potentiel de l'électrode négative est mesuré par rapport à une électrode de référence. Une électrode de référence est une électrode dont le potentiel est fixe durant la mesure. Une électrode de travail, c'est-à-dire une électrode active lors de la réaction électrochimique, ne peut pas être une électrode de référence car son potentiel varie en raison du passage du courant.

Ladite électrode de référence est l'électrode à air de la batterie qui n'est pas utilisée lors de la charge. Le potentiel de l'électrode négative peut donc être mesuré par rapport à la première électrode positive à air. En effet, lors de la phase de charge de la batterie, la première électrode à air n'est pas l'électrode de travail, et aucun courant ne circule à travers elle.

L'utilisation de l'électrode positive à air en tant qu'électrode de référence pour la mesure du potentiel de l'électrode négative lors de la phase de charge de la batterie est particulièrement avantageuse car il n'est pas nécessaire d'ajouter une électrode au dispositif qui serait uniquement dédiée à cette fonction. Ce mode de réalisation présente l'avantage d'être simple et peu coûteux car il ne nécessite pas de modifications structurelles critiques sur les batteries déjà existantes pour être mis en oeuvre. Celles-ci ne comprennent avantageusement pas d'électrode supplémentaire, leur poids et leur encombrement ne sont pas affectés.

Le procédé de charge selon l'invention peut comprendre deux étapes :
- une première étape durant laquelle le courant de charge est imposé et le potentiel de l'électrode négative varie librement, jusqu'à ce qu'il atteigne une valeur absolue égale ou inférieure à la valeur critique de charge, puis
- une seconde étape durant laquelle le potentiel de l'électrode négative est fixé, de préférence à la valeur critique de charge, et le courant de charge varie librement.

De préférence, la charge est arrêtée lorsque la valeur absolue du courant de charge atteint une valeur minimale prédéfinie. Ladite valeur minimale prédéfinie peut être comprise entre 5% et 30% du courant en début de charge, préférentiellement entre 8% et 20% du courant en début de charge, et plus préférentiellement entre 10% et 15% du courant en début de charge. Cet arrêt de la phase de charge permet avantageusement d'éviter la formation de zinc dentritique et mousseux qui peut se produire en fin de charge lorsque la réaction de réduction d'eau en hydrogène devient prédominante.

La phase de charge précédemment décrite peut faire partie d'un procédé de stockage et de restitution d'énergie électrique. La présente invention a également pour objet un procédé de stockage et de restitution d'énergie électrique utilisant une batterie zinc-air comprenant au moins une électrode négative et une électrode positive à air, comprenant les étapes successives suivantes :
(a) une phase de charge, telle que définie précédemment, et
(b) une phase de décharge.

Lors de la phase (a) de charge, la seconde électrode positive de dégagement d'oxygène peut être utilisée comme électrode de travail de la batterie, c'est-à-dire comme électrode positive active sur laquelle a lieu la réaction électrochimique intervenant lors de la recharge de la batterie.

Lors de la phase (b) de décharge, la seconde électrode positive à dégagement d'oxygène est déconnectée et la première électrode positive à air peut être utilisée comme électrode de travail, c'est-à-dire comme électrode positive active sur laquelle a lieu la réaction électrochimique intervenant lors de la décharge de la batterie.

En outre, la présente invention a pour objet une batterie zinc-air permettant de mettre en oeuvre le procédé de charge selon l'invention, ainsi que le procédé de stockage et de restitution d'énergie électrique également objet de la présente invention. Ladite batterie zinc-air comprend :
- une borne négative,
- une borne positive,
- une électrode négative, connectée à la borne négative,
- une première électrode positive à air,
- une seconde électrode positive à dégagement d'oxygène,
- un moyen de commutation permettant de connecter à la borne positive soit la première électrode positive à air, soit la seconde électrode positive de dégagement d'oxygène,
- un moyen de charge de la batterie, pouvant être connecté à l'électrode négative et à la seconde électrode positive à dégagement d'oxygène, et
- un moyen de contrôle de la charge de la batterie adapté pour mesurer la tension entre l'électrode négative et la première électrode positive à air, et pour agir sur le moyen de charge de façon à ce que la valeur absolue de cette tension soit inférieure ou égale à une valeur de potentiel critique.

Outre les trois électrodes précédemment décrites, cette batterie zinc-air comprend une borne négative et une borne positive. Ces deux bornes permettent de connecter la batterie pour former un circuit de puissance : soit un circuit de charge dans lequel la batterie est reliée à un moyen de charge qui fournit de l'énergie à la batterie, soit un circuit de décharge dans lequel la batterie est connectée à un dispositif quelconque auquel elle fournit de l'énergie. L'électrode négative est connectée en permanence, c'est à dire pendant la charge et pendant la décharge, à la borne négative de la batterie. Lors de la phase (a) de charge, la seconde électrode positive à dégagement d'oxygène peut être connectée à la borne positive de la batterie et la première électrode positive à air est déconnectée de la borne positive de la batterie. Lors de la phase (b) de décharge, la première électrode positive à air peut être connectée à la borne positive de la batterie et la seconde électrode positive de dégagement d'oxygène est déconnectée de la borne positive de la batterie.

La batterie comprend également un moyen de commutation permettant de connecter à la borne positive soit la première électrode positive à air, soit la seconde électrode positive de dégagement d'oxygène. Selon un mode de réalisation, la commutation de la connexion de la borne positive entre la première et la seconde électrode positive peut être actionnée manuellement. Cependant, avantageusement, le moyen de commutation peut être relié à un moyen de commande de la commutation. Ce moyen peut être électronique, et il peut avantageusement être un élément d'un système électronique de contrôle ou BMS. Le moyen de commande de la commutation peut actionner le moyen de commutation de façon à ce que ce soit la première électrode positive à air qui soit reliée à la borne positive de la batterie lorsque celle-ci est en décharge, et la seconde électrode positive de dégagement d'oxygène qui soit reliée à la borne positive de la batterie lorsque celle-ci est en recharge.

Le moyen de commande de la commutation peut être adapté pour mesurer la tension entre les bornes positives et négatives de la batterie. Ceci revient à mesurer la différence de potentiel entre les deux électrodes de travail, à savoir entre l'électrode négative et la première électrode positive à air lors de la décharge, et entre l'électrode négative et la seconde électrode positive à dégagement d'oxygène lors de la recharge.

La batterie comprend également un moyen de charge de la batterie, pouvant être connecté à l'électrode négative et à la seconde électrode positive à dégagement d'oxygène, et un moyen de contrôle de la charge de la batterie adapté pour mesurer la tension entre l'électrode négative et la première électrode positive à air, et pour agir sur le moyen de charge de façon à ce que la valeur absolue de cette tension soit inférieure ou égale à une valeur de potentiel critique.

Ce moyen de contrôle de la charge peut être un élément d'un système électronique de contrôle ou BMS. Le moyen de contrôle de la charge peut être adapté pour comparer en continu, lors de la charge, la valeur du potentiel de l'électrode négative mesurée selon l'invention à une valeur de consigne, ici la valeur du potentiel critique, et pour envoyer un signal de régulation aux moyens de charge de la batterie de façon à ce que la valeur absolue du potentiel mesuré reste inférieure à la valeur de consigne.

En outre, ce moyen de contrôle de la charge peut également être adapté pour comparer, en continu, lors de la charge, la valeur du courant de charge à une valeur consigne, ici un courant limite prédéfini, et pour envoyer un signal de régulation aux moyens de charges de la batterie de façon à ce que la charge soit arrêtée lorsque le courant mesuré devient inférieur à cette valeur consigne.

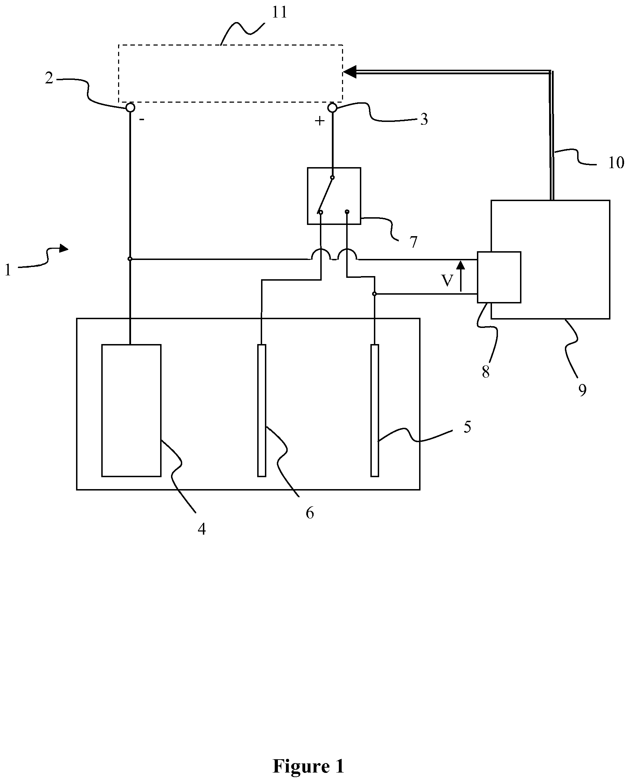

L'invention sera à présent décrite plus en détail en référence à la **figure 1** annexée représentant schématiquement d'un mode de réalisation d'une batterie zinc-air objet de la présente invention, dans une configuration de charge.

La batterie **1** comprend une borne négative **2,** une borne positive **3,** une électrode négative **4,** connectée à la borne positive **2,** une première électrode positive à air **5** et une seconde électrode positive à dégagement d'oxygène **6.** Dans la configuration représentée sur la **figure 1****,** qui est une configuration que peut prendre la batterie lors d'une phase de charge, c'est la seconde électrode positive à dégagement d'oxygène **6** qui est connectée à la borne positive **3** de la pile. Toutefois, la batterie **1** comprend également un moyen de commutation **7** qui permet de déconnecter la seconde électrode positive de dégagement d'oxygène **6** de la borne positive **3** pour y connecter la première électrode positive à air **5** lors des phases de décharge. Un moyen de charge **11** est connecté aux bornes négatives **2** et positives **3** de la batterie.

La batterie **1** comprend en outre un moyen de mesure du potentiel de l'électrode négative **8.** La mesure de ce potentiel est effectuée en mesurant la tension **V entre** l'électrode négative **4** et la première électrode positive à air **5.** Lors de la phase de charge de la batterie représentée, la première électrode positive à air **5** joue le rôle d'une électrode de référence car elle n'est pas connectée à la borne positive **3** de la batterie.

La batterie **1** comprend en outre un moyen de contrôle de la charge **9.** Ce moyen de contrôle de la charge **9** compare en continu, lors de la recharge, la valeur **V** mesurée par le moyen de mesure **8** à une valeur de consigne **Vc,** et le moyen de contrôle de la charge **9** envoie un signal de régulation **10** aux moyens de charge **11** de la batterie de façon à ce que la valeur absolue du potentiel mesuré reste inférieure à la valeur d'un potentiel critique de charge préalablement défini.

### EXEMPLE

Une batterie zinc-air, comprenant une électrode négative en zinc de 30 cm², une première électrode positive à air composée de deux électrodes de 30 cm² de type E4 commercialisée par la société « Electric Fuel » du groupe Aero Tech raccordées en parallèles et disposées symétriquement de chaque coté de l'électrode de zinc et une seconde électrode positive de dégagement d'oxygène composée de deux grilles de nickel métal de 30 cm² raccordées en parallèles et disposées symétriquement de chaque coté de l'électrode de zinc a été utilisée.

Pour cette batterie, la valeur critique du potentiel de l'électrode négative a été déterminée de la façon suivante :
Le courant de charge a été fixé à une valeur constante de -700 mA. Au bout de 1 minute de charge à ce courant fixe, le potentiel de l'électrode négative a été mesuré par rapport à l'électrode à air et valait -1,50 V. Le potentiel de l'électrode négative a donc été déterminé en ajoutant 20 mV à la valeur absolue de ce potentiel mesuré, soit -1,52 mV.

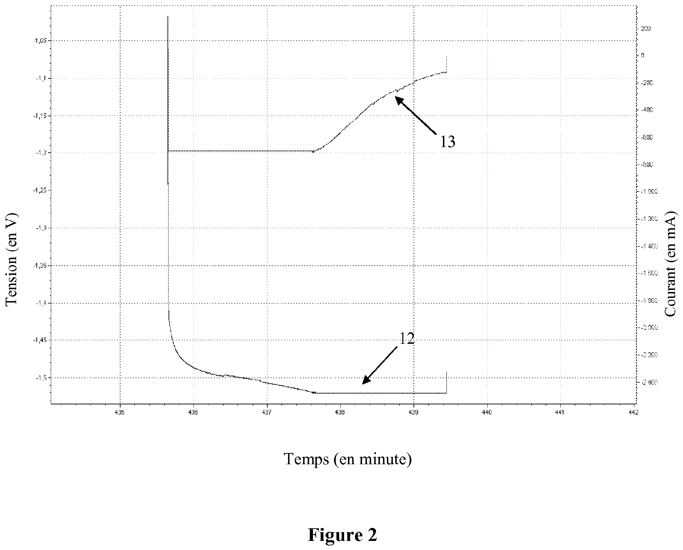

Cette batterie a été rechargée selon le procédé objet de la présente demande. Les courbes de charges sont représentées sur la **figure 2** : la tension entre l'électrode négative et l'électrode à air en fonction du temps est la courbe **12** ; le courant de charge en fonction du temps est la courbe **13.**

Dans un premier temps, le courant de charge a été fixé à -700 mA. La tension entre l'électrode négative et l'électrode à air a été laissée libre de varier pendant cette phase, tout en contrôlant qu'elle ne dépasse pas la valeur limite de -1,52 mV.

Lorsque cette valeur de -1,52 mV a été atteinte pour la première fois, le potentiel de l'électrode négative a été fixé égal à cette valeur de -1,52 mV. La charge de la batterie s'est alors poursuivie dans un second temps avec une tension fixée et le courant de charge a alors été laissé libre de varier.

La charge a été arrêtée lorsque la valeur absolue du courant de charge a atteint une valeur minimale préalablement fixée à -120 mA.

Les inventeurs ont constaté qu'en respectant ce procédé de charge, la batterie zinc-air ne présentait pas de signes de dégradation qui seraient dus à la formation sur l'électrode négative d'un dépôt de zinc sous forme de mousse ou sous forme de dendrites. La batterie zinc-air a pu subir une série de 500 cycles de charge telle que décrite ci-dessus et de décharge sans montrer de signes de dégradation.

Dans un autre exemple utilisant le même dispositif, dans la même configuration, le courant de charge a été fixé à -700 mA mais la tension entre l'électrode négative et l'électrode à air a été laissée libre sans aucun contrôle ou plafonnement pendant toute la charge. Le potentiel de l'électrode négative par rapport à l'électrode à air est monté jusqu'à 1,68 V. Un court-circuit entre l'électrode négative et l'électrode positive utilisée en charge a été observé après 12 cycles.

## Revendications

1. Procédé de charge d'une batterie zinc-air comprenant au moins une électrode négative, une première électrode positive à air et une seconde électrode positive de dégagement d'oxygène, **caractérisé en ce que** le potentiel de l'électrode négative pendant la charge est maintenu à une valeur absolue inférieure ou égale à la valeur d'un potentiel critique de charge, ledit potentiel critique de charge étant compris entre 1,45 V et 1,70 V, et le potentiel de l'électrode négative étant mesuré par rapport à une électrode de référence, ladite électrode de référence étant l'électrode à air de la batterie qui n'est pas utilisée lors de la charge,.

2. Procédé selon la revendication 1, **caractérisé par le fait que** ladite charge de la batterie est être faite en deux étapes :
- une première étape durant laquelle le courant de charge est imposé et le potentiel de l'électrode négative varie librement, jusqu'à ce qu'il atteigne une valeur absolue égale ou inférieure à une valeur critique de charge, puis,
- une seconde étape durant laquelle le potentiel de l'électrode négative est fixé, de préférence à la valeur critique de charge, et le courant de charge varie librement.

3. Procédé selon l'une quelconque des revendications 1 ou 2, **caractérisé par le fait que** la charge est arrêtée lorsque la valeur absolue du courant de charge atteint une valeur minimale prédéfinie.

4. Procédé selon l'une quelconque des revendications 1 à 3, **caractérisé par le fait que** le potentiel critique de charge a été déterminé selon la méthode suivante :
- débuter la charge de ladite batterie zinc-air, en passant un courant constant entre l'électrode de zinc et la seconde électrode positive de dégagement d'oxygène,
- mesurer le potentiel de l'électrode de zinc par rapport à la première électrode à air après une minute de charge, et
- déterminer le potentiel critique de charge en ajoutant 20 mV à la valeur absolue dudit potentiel mesuré.

5. Procédé de stockage et de restitution d'énergie électrique utilisant une batterie zinc-air comprenant au moins une électrode négative et une électrode positive à air, comprenant les étapes successives suivantes :
(a) une phase de charge, telle que définie dans l'une quelconque des revendications 1 à 4, et
(b) une phase de décharge.

6. Batterie zinc-air comprenant :
- une borne négative,
- une borne positive,
- une électrode négative, connectée à la borne négative,
- une première électrode positive à air,
- une seconde électrode positive à dégagement d'oxygène,
- un moyen de commutation permettant de connecter à la borne positive soit la première électrode positive à air, soit la seconde électrode positive de dégagement d'oxygène,
- un moyen de charge de la batterie, pouvant être connecté à l'électrode négative et à la seconde électrode positive à dégagement d'oxygène, et
- un moyen de contrôle de la charge de la batterie adapté pour mesurer la tension entre l'électrode négative et la première électrode positive à air, et pour agir sur le moyen de charge de façon à ce que la valeur absolue de cette tension soit inférieure ou égale à une valeur de potentiel critique.

## Patentansprüche

1. Verfahren zum Laden einer Zink-Luft-Batterie, die mindestens eine negative Elektrode, eine erste positive Luft-Elektrode und eine zweite positive Sauerstoffentwicklungselektrode aufweist, **dadurch gekennzeichnet, dass** das Potential der negativen Elektrode während des Ladens auf einem Absolutwert gehalten wird, der kleiner oder gleich dem Wert eines kritischen Ladepotentials ist, wobei das kritische Ladepotential zwischen 1,45V und 1,70V ist und das Potential der negativen Elektrode bezüglich einer Referenzelektrode gemessen wird, wobei die Referenzelektrode die Luft-Elektrode der Batterie ist, die beim Laden nicht verwendet wird.

2. Verfahren nach Anspruch 1, **dadurch gekennzeichnet, dass** das Laden der Batterie in zwei Schritten erfolgt:
- einem ersten Schritt, während welchen der Ladestrom aufgezwungen wird und das Potential der negativen Elektrode frei variiert, bis dass es einen Absolutwert erreicht, der gleich oder kleiner als ein kritischer Ladewert ist, dann
- einem zweiten Schritt, während welchen das Potential der negativen Elektrode auf einem festen Wert, vorzugsweise dem kritischen Ladewert, gehalten wird und der Ladestrom frei variiert.

3. Verfahren nach einem der Ansprüche 1 oder 2, **dadurch gekennzeichnet, dass** das Laden angehalten wird, wenn der Absolutwert des Ladestroms einen vorgegebenen Minimalwert erreicht.

4. Verfahren nach einem der Ansprüche 1 bis 3, **dadurch gekennzeichnet, dass** das kritische Ladepotential nach der folgenden Methode bestimmt worden ist:
- Starten des Ladens der Zink-Luft-Batterie durch Fließenlassen eines konstanten Stroms zwischen der Zink-Elektrode und der zweiten positiven Sauerstoffentwicklungselektrode,
- Messen des Potentials der Zink-Elektrode bezüglich der ersten Luft-Elektrode nach einer Minute des Ladens und
- Bestimmen des kritischen Ladepotentials durch Addieren von 20mV zu dem Absolutwert des gemessenen Potentials.

5. Verfahren zum Speichern und Wiedergewinnen von elektrischer Energie unter Verwendung einer Zink-Luft-Batterie, die mindestens eine negative Elektrode und eine positive Luft-Elektrode aufweist, mit den aufeinander folgenden nachstehenden Schritten:
(a) einer Ladephase wie sie in einem der Ansprüche 1 bis 4 definiert ist, und
(b) einer Entladephase.

6. Zink-Luft-Batterie, aufweisend:
- einen negativen Anschluss,
- einen positiven Anschluss,
- eine mit dem negativen Anschluss verbundene negative Elektrode,
- eine erste positive Luft-Elektrode,
- eine zweite positive Sauerstoffentwicklungselektrode,
- eine Umschalteinrichtung, die erlaubt, den positiven Anschluss entweder mit der ersten positiven Luft-Elektrode oder mit der zweiten positiven Sauerstoffentwicklungselektrode zu verbinden,
- eine Batterie-Ladeeinrichtung, die mit der negativen Elektrode und der zweiten positiven Sauerstoffentwicklungselektrode verbunden werden kann, und
- eine Einrichtung zur Steuerung des Ladens der Batterie, die geeignet ist, um die Spannung zwischen der negativen Elektrode und der ersten positiven Luft-Elektrode zu messen und um auf die Ladeeinrichtung derart einzuwirken, dass der Absolutwert dieser Spannung kleiner oder gleich einem kritischen Potentialwert ist.

## Claims

1. Method for charging a zinc-air battery comprising at least a negative electrode, a first positive air electrode and a second positive oxygen evolution electrode, **characterized in that** the potential of the negative electrode during charging is kept at an absolute value less than or equal to the value of a critical charging potential, said critical charging potential can be comprised between 1.45 V and 1.70 V, and the potential of the negative electrode is measured relative to a reference electrode, said reference electrode being the air electrode of the battery which is not used during charging.

2. Method according to claim 1, **characterized in that** said charging of the battery is performed in two steps:
- a first step during which the charging current is applied and the potential of the negative electrode varies freely, until it reaches an absolute value less than or equal to a critical charging value, then
- a second step during which the potential of the negative electrode is set, preferably at the critical charging value, and the charging current varies freely.

3. Method according to any one of claims 1 or 2, **characterized in that** charging is stopped when the absolute value of the charging current reaches a predefined minimum value.

4. Method according to any one of claims 1 to 3, **characterized in that** the critical charging potential has been determined according to the following method:
- beginning charging said zinc-air battery, by passing a constant current between the zinc electrode and the second positive oxygen evolution electrode,
- measuring the potential of the zinc electrode relative to the first air electrode after charging for one minute, and
- determining the critical charging potential by adding 20 mV to the absolute value of said measured potential.

5. Method for storing and releasing electrical energy using a zinc-air battery comprising at least a negative electrode and a positive air electrode, comprising the following successive steps:
(a) a charging phase, as defined in any one of claims 1 to 4, and
(b) a discharging phase.

6. Zinc-air battery comprising:
- a negative terminal,
- a positive terminal,
- a negative electrode, connected to the negative terminal,
- a first positive air electrode,
- a second positive oxygen evolution electrode,
- a switching means allowing either the first positive air electrode or the second positive oxygen evolution electrode to be connected to the positive terminal,
- a means for charging the battery, which is connectable to the negative electrode and to the second positive oxygen evolution electrode, and
- a means for controlling charging of the battery adapted for measuring the voltage between the negative electrode and the first positive air electrode, and for acting on the charging means so that the absolute value of this voltage is less than or equal to a critical value of potential.
